# FASCICULE DE BREVET EUROPEEN

(11) **EP 0 633 392 B1**
(45) Date de publication et mention de la délivrance du brevet: **22.04.1998**
(21) Numéro de dépôt: 94401550.2
(22) Date de dépôt: 06.07.1994
(51) Int. Cl.: F01D 17/16, F01D 5/14, F01D 5/18

(54) **Aube de turbomachine à cambrure variable**
Turbomaschinenschaufel mit variabler Wölbung
Turbomachine blade with variable camber

(30) Priorité: 07.07.1993 FR 9308316
(43) Date de publication de la demande: 11.01.1995
(73) Titulaire: SOCIETE NATIONALE D'ETUDE ET DE CONSTRUCTION DE MOTEURS D'AVIATION, "S.N.E.C.M.A.", 75015 Paris (FR)
(72) Inventeur: Delonge, Jean-Claude, F-91100 Corbeil Essonnes (FR); Loudet, Claude Joseph Auguste, F-77950 Maincy (FR); Vermont, Gérard Robert Edmond René, F-77170 Coubert (FR)

(56) Documents cités:
- EP-A- 0 223 194
- DE-B- 1 041 739
- FR-A- 2 599 785
- GB-A- 2 218 746
- US-A- 3 237 918
- PATENT ABSTRACTS OF JAPAN vol. 7, no. 193 (M-238) (1338) 24 Août 1983 & JP-A-58 093 903 (HITACHI SEISAKUSHO) 3 Juin 1983

## Description

L'invention se rapporte aux aubes à cambrure variable utilisées dans les turbomachines, en particulier les turbomoteurs pour aéronefs.

Afin d'améliorer le rendement d'une turbomachine susceptible de fonctionner à des régimes différents, il est courant de modifier l'inclinaison de certaines aubes en fonction du régime de la turbomachine. Dans une technologie plus élaborée, on peut aussi faire varier la cambrure de certaines aubes en fonction du régime de la turbomachine. Ce type d'aube à cambrure variable comporte généralement une partie avant appelée bord d'attaque, et une partie arrière appelée bord de fuite, le bord d'attaque et le bord de fuite étant articulés l'un par rapport à l'autre.

On connait des aubes à cambrure variable comportant un bord d'attaque fixe et un bord de fuite mobile. Le brevet EP 0 274 293 en donne un exemple relatif à une aube directrice d'entrée d'air, dans laquelle le bord d'attaque constitue aussi un bras rayonnant assurant la liaison entre le carter d'entrée d'air d'un turbomoteur pour aéronef et son moyeu.

On connait aussi des aubes à cambrure variable dont le bord d'attaque est pivotant et le bord de fuite fixe, par exemple celle qui est décrite dans le brevet FR 2 325 831.

On connait aussi des aubes à cambrure variable dont le bord d'attaque et le bord de fuite sont pivotants, comme dans le brevet US 4 995 786.

Dans ces trois types d'aubes, l'amélioration de rendement obtenu en ajustant au mieux la cambrure de l'aube est altérée par les perturbations qui apparaissent dans l'écoulement du fluide le long des faces latérales de l'aube et à la hauteur de l'articulation. Ces perturbations proviennent à la fois de l'espace laissé au niveau de l'articulation entre le bord d'attaque et le bord de fuite, ainsi que de la discontinuité des surfaces latérales de l'aube au niveau de l'articulation, c'est-à-dire du changement brutal de la direction de la tangente à ces surfaces dans le sens de l'écoulement du fluide.

Pour remédier à cet inconvénient, le brevet EP 0 223 194 propose de disposer une membrane en élastomère ou autre matériau sur chaque face de l'aube, dans le voisinage de l'articulation. Cette solution empêche l'air de pénétrer dans l'espace entre le bord d'attaque et le bord de fuite, mais il subsiste une rupture dans la continuité des surfaces latérales de l'aube à proximité de l'articulation.

Afin de refroidir une aube, ou bien afin de la réchauffer, par exemple pour éliminer le givre susceptible de se former à sa surface, il est connu de faire circuler un fluide de refroidissement ou de réchauffage à l'intérieur de l'aube. Cette opération est rendue complexe par la présence de l'articulation entre le bord d'attaque et le bord de fuite.

On peut injecter séparément le fluide dans le bord d'attaque et dans le bord de fuite. L'injection dans la partie fixe de l'aube ne pose pas de problème particulier, alors que l'injection dans la partie mobile de l'aube demande un second circuit passant par exemple par les pivots sur lesquels la partie mobile de l'aube tourillonne dans le carter. Le brevet FR 2 599 785 en donne un exemple.

On peut aussi injecter le fluide à un endroit adapté de l'aube et le faire circuler à l'intérieur de l'aube de la partie fixe à la partie mobile ou inversement, mais il faut alors accepter des pertes de fluide par défaut d'étanchéité au niveau de l'articulation. Cette solution est de ce fait difficilement applicable lorsqu'il s'agit de dégivrer des aubes d'entrée d'air de turbomachines telles que celles qui sont décrites dans le brevet EP 0 274 293 déjà cité. En effet l'air chaud de dégivrage doit être prélevé sur le compresseur et les fuites au niveau de l'articulation rendent nécessaire un prélèvement supplémentaire qui pénalise le fonctionnement du compresseur.

A noter la terminologie couramment utilisée pour désigner chacun des flancs d'une aube. Le flanc qui exerce une poussée sur le fluide à traiter ou qui reçoit une poussée de celui-ci est généralement concave et désigné par le terme intrados. Le flanc opposé à l'intrados, généralement convexe est désigné par le terme extrados.

On connait aussi par le brevet US 3 237 918 une aube de turbomachine à cambrure variable comportant un bord d'attaque solidaire de la structure fixe, un bord de fuite mobile et un système mécanique assurant la continuïté aérodynamique du bord d'attaque avec le bord de fuite. Ce système mécanique comporte une lame flexible convexe formant l'extrados, cette lame flexible étant solidaire par une extrémité au bord d'attaque et par l'autre extrémité au bord de fuite, cette lame maintenant ainsi le bord de fuite. Le système mécanique comporte aussi deux lames concaves formant l'intrados, une première lame étant flexible et solidaire du bord d'attaque alors que la seconde lame est rigide et solidaire du bord de fuite, ces deux lames se chevauchant et coulissant l'une contre l'autre par frottement. L'aube comporte aussi un mécanisme d'entrainement en rotation du bord de fuite, ce mécanisme d'entrainement devant comporter un élément coulissant du fait que le bord de fuite est maintenu par la lame formant l'extrados. Une telle aube présente cependant l'inconvénient d'être mécaniquement complexe et fragile et la lubrification des pièces coulissantes est délicate à assurer.

On connait aussi par l'abrégé du brevet JP 58-93903 une aube à cambrure variable comportant un bord d'attaque articulé avec un bord de fuite, un bilame thermiquement déformable raccordant l'extrados du bord d'attaque avec celui du bord de fuite, cette aube comportant aussi une lame flexible en élastomère raccordant l'intrados du bord d'attaque avec celui du bord de fuite. Une telle aube est cependant totalement dépourvue de flexibilité, et son emploi est limité aux cas de cambrures devant être fonction de la seule température.

Pour obtenir un écoulement régulier du fluide le long des flancs d'une aube à cambrure variable, l'invention propose de laisser un espace suffisant entre le bord d'attaque et le bord de fuite de l'aube, et de disposer dans cet espace une jonction élastique monobloc, c'est à dire en un seul tenant, dont l'un des flancs est dans la continuité des flancs du bord d'attaque et du bord de fuite définissant l'intrados, et dont l'autre flanc est dans la continuité des flancs du bord d'attaque et du bord de fuite définissant l'extrados, ledit bloc ayant en conséquence l'épaisseur de l'aube à l'endroit de la jonction élastique.

Cette jonction élastique est délimitée à l'avant par le bord d'attaque, et à l'arrière par le bord de fuite. Elle remplit l'espace laissé entre le bord d'attaque et le bord de fuite. Elle est solidaire par un de ses côtés au bord d'attaque et par son côté opposé au bord de fuite, notamment au moyen d'un collage.

Le bord d'attaque et le bord de fuite comportent chacun un moyen interne de circulation d'un fluide, et la jonction élastique comporte une pluralité de conduits la traversant, lesdits conduits mettant en communication lesdits moyens internes de circulation d'un fluide. Ce dispositif permet de faire circuler à l'intérieur de l'aube un fluide de refroidissement, ou bien un fluide de réchauffage par exemple pour dégivrer l'aube.

Dans un mode de réalisation préféré, le moyen de circulation de fluide dans le bord d'attaque de l'aube est une cavité allongée s'étendant sur tout ou partie de la hauteur du bord d'attaque.

Cette cavité peut toutefois affaiblir le bord d'attaque si elle est contigüe à la jonction élastique. C'est pourquoi on préfère renforcer ce bord d'attaque par une cloison reliant les parois formant le flanc de l'intrados et le flanc de l'extrados dudit bord d'attaque. Cette cloison est disposée entre la cavité et la jonction élastique. La cloison est aussi traversée par des évidements placés en regard des conduits traversant la jonction élastique, afin de permettre la circulation du fluide entre le bord d'attaque et la jonction élastique.

Du fait que le bord de fuite est généralement plus mince et allongé que le bord d'attaque, le moyen de circulation du fluide dans ledit bord de fuite comporte une cavité jouant le rôle de collecteur dans lequel débouchent les conduits traversant la jonction élastique. Ce moyen de circulation de fluide comporte aussi une pluralité de conduits débouchant par une extrémité dans le collecteur et par l'autre extrémité sur le flanc du bord de fuite définissant l'intrados.

Dans un mode de réalisation préféré, le bord d'attaque est fixe, le bord de fuite est pivotant et le fluide de refroidissement ou de réchauffage est injecté dans le moyen de circulation de fluide du bord d'attaque.

Avec cette disposition, le fluide injecté passe dans le moyen de circulation du fluide du bord d'attaque, traverse la jonction élastique par ses multiples conduits, se mélange dans le collecteur, se divise ensuite dans les conduits du bord de fuite et ressort de l'aube par l'intrados à proximité de l'extrémité du bord de fuite. Le fluide de refroidissement ou de réchauffage a ainsi une action thermique homogène sur le bord d'attaque, sur la jonction élastique et sur le bord de fuite de l'aube.

Le collage réalisé entre la jonction élastique et respectivement le bord d'attaque et le bord de fuite permet d'assurer une parfaite continuité des surfaces latérales du bord d'attaque, de la jonction élastique et du bord de fuite, et permet aussi d'assurer une bonne étanchéité entre la jonction élastique et les moyens de circulation du fluide du bord d'attaque et du bord de fuite.

Un avantage de l'invention est de permettre l'amélioration de l'efficacité du procédé de réchauffage ou de refroidissement des aubes par injection d'un fluide dans des cavités de l'aube prévues à cet effet, car la circulation de ce fluide entre le bord d'attaque et le bord de fuite s'effectue dans un circuit étanche du fait de la présence de la jointure élastique reliant le bord d'attaque et le bord de fuite.

Par exemple, dans le cas d'une aube directrice d'entrée d'air, l'air chaud qui est utilisé pour le dégivrage de cette aube peut être ramené de 400°C à 200°C. Cet air chaud qui est habituellement prélevé dans les zones à haute pression du compresseur peut avec l'invention être prélevé dans des zones à pression plus basse, ce qui pénalise d'autant moins le fonctionnement de ce compresseur.

L'aube faisant l'objet de l'invention est aussi moins sensible au givrage ce qui rend son utilisation intéressante dans les situations où le problème se pose, par exemple au niveau du premier étage du compresseur de la turbomachine lorsqu'il est exposé aux intempéries.

En effet, dans les aubes à cambrure variable classique, les perturbations de l'écoulement de l'air au niveau de l'articulation ont pour effet de favoriser la production et le dépôt de givre sur la partie articulée de l'aube. Avec l'invention, les perturbations de l'écoulement de l'air sont neutralisées, et le dépôt de givre est en conséquence plus réduit.

Cette réduction du dépôt de givre est encore renforcée par le fait que la jonction élastique favorise la dislocation et le détachement de la carapace de givre rigide qui tend à se former à la surface de l'aube.

L'invention sera mieux comprise au vu des figures annexées et d'un exemple de réalisation de l'invention appliquée à une aube directrice d'entrée d'air de turbomoteur pour aéronef.

La figure 1 représente une vue en coupe de l'aube faisant l'objet de l'invention suivant un plan perpendiculaire à la hauteur de l'aube.

La figure 2 représente une vue de profil d'une aube directrice d'entrée d'air de turbomoteur dans laquelle sont représentés en coupe en particulier les parties hautes et basses de l'aube, ainsi que le montage de l'aube dans le carter d'entrée d'air du turbomoteur.

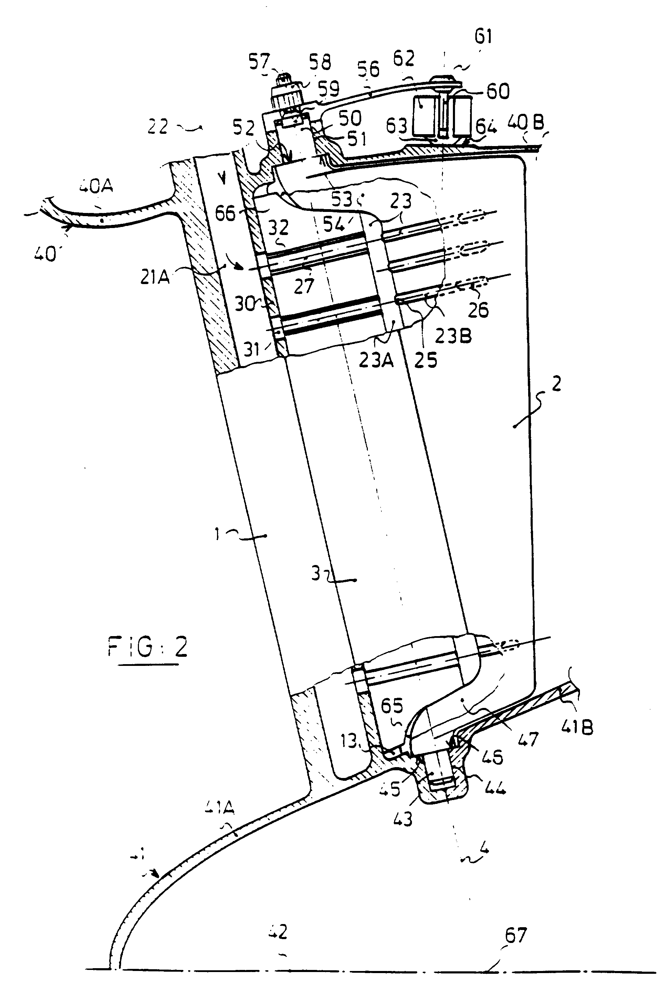

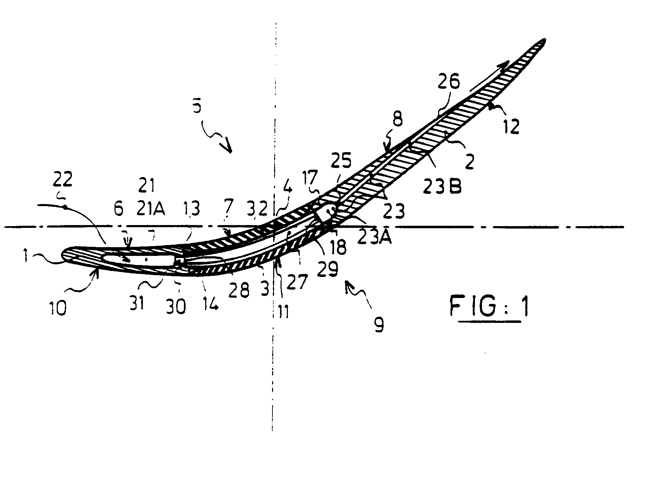

On se reportera tout d'abord à la figure 1. L'aube comporte une partie avant ou bord d'attaque 1, une partie arrière ou bord de fuite 2, ainsi qu'une jonction élastique monobloc 3 solidaire du bord d'attaque 1 et du bord de fuite 2. Le bord d'attaque 1 et le bord de fuite 2 sont articulés l'un par rapport à l'autre suivant un axe géométrique de rotation 4.

L'aube présente un flanc concave ou intrados 5 qui est défini de l'avant vers l'arrière de l'aube par un flanc 6 du bord d'attaque 1, un flanc 7 de la jonction élastique 3 et un flanc 8 du bord de fuite 2, ledit flanc 7 de la jonction élastique 3 présentant une courbure régulière dans la continuité des flancs 6 et 8 respectivement du bord d'attaque 1 et du bord de fuite 2, afin de permettre un écoulement régulier du fluide le long de l'intrados 5.

De la même manière, l'aube présente aussi un flanc convexe ou extrados 9 qui est défini de l'avant vers l'arrière de l'aube par un flanc 10 du bord d'attaque 1, un flanc 11 de la jonction élastique 3 et un flanc 12 du bord de fuite 2, ledit flanc 11 de la jonction élastique 3 présentant une courbure régulière dans la continuité des flancs 10 et 12 respectivement du bord d'attaque 1 et du bord de fuite 2, afin de permettre un écoulement régulier du fluide le long de l'extrados 9.

Le bord d'attaque 1 comporte deux lèvres 13 et 14 pénétrant dans deux sillons de la jonction élastique 3, lesdits sillons ayant une forme exactement complémentaire aux lèvres 13 et 14 et formant avec elles une surface de contact utilisée pour le collage de la jonction élastique 3 sur le bord d'attaque 1. De la même manière, le bord de fuite 2 comporte aussi deux lèvres 17 et 18 pénétrant dans deux autres sillons de la jonction élastique 3, lesdits sillons ayant une forme exactement complémentaire aux lèvres 17 et 18 et formant avec elles une surface de contact utilisée pour le collage de la jonction élastique 3 sur le bord de fuite 2.

Il est clair que cette disposition augmente la surface de collage et par conséquent la résistance de ce collage. Cette disposition facilite aussi le positionnement avant et pendant le collage de la jonction élastique 3 par rapport au bord d'attaque 1 et au bord de fuite 2.

Les lèvres 13, 14, 17 et 18 s'étendent de préférence sur toute la hauteur de la jonction élastique 3 en contact avec le bord d'attaque 1 et le bord de fuite 2.

L'aube a un rapport la /e = 16 avec :
- la =: largeur de l'aube, entre l'extrémité du bord d'attaque et l'extrémité du bord de fuite
- e =: épaisseur de l'aube.

Pour une variation de l'angle d'inclinaison du bord de fuite allant de 0 à 66°, un rapport le/e = 4 a été adapté avec :
le = longueur de l'espace laissé entre le bord d'attaque et le bord de fuite.
e = épaisseur de l'aube.

Afin d'éviter des contraintes à l'arrachement sur les collages, la largeur de la jonction élastique 3 est légèrement augmentée pour que cette jonction soit comprimée entre le bord d'attaque 1 et le bord de fuite 2. La compression doit toutefois devenir nulle ou négative vers les fortes cambrures de l'aube, afin de ne pas provoquer un déportement de la jonction élastique 3 du côté de l'extrados 9.

Le bord d'attaque 1 comporte un moyen 21 permettant la circulation interne d'un fluide 22 de dégivrage. Dans un mode de réalisation préféré, ce moyen 21 est constitué d'une cavité 21A s'étendant sur toute la hauteur du bord d'attaque 1.

Le bord de fuite 2 comporte un moyen 23 de circulation interne du fluide de dégivrage. Dans un mode de réalisation préféré, ce moyen 23 comporte une cavité 23A adjacente à la jonction élastique 3 et faisant office de collecteur, ainsi qu'une pluralité de conduits 23B dont une extrémité 25 débouche dans la cavité 23 et dont l'autre extrémité 26 débouche sur la face 8 formant l'intrados du bord de fuite 2.

La jonction élastique 3 comporte une pluralité de conduits 27 dont une extrémité 28 passe entre les lèvres 13 et 14 et débouche dans la cavité 22 du bord d'attaque 1 et dont l'autre extrémité 29 passe entre les lèvres 17 et 18 et débouche dans la cavité 23A du bord de fuite 2. Avec cette disposition, le fluide de réchauffage 22 traverse l'aube en empruntant la cavité 21 du bord d'attaque 1, les conduits 27 de la jonction élastique 3, la cavité 23A et les conduits 23B du bord de fuite 2 pour ressortir sur la face 8 du bord de fuite 2 formant l'intrados 5.

Afin d'en augmenter la résistance, le bord d'attaque 1 comporte une cloison 30 qui délimite la cavité 21A du côté de la jonction élastique 3, ladite cloison 30 s'étendant sur toute ou partie de la hauteur de ladite cavité 21A. La cloison 30 comporte une pluralité d'évidements 31 en regard des conduits 27 pour permettre le passage du fluide 22 de la cavité 21A dans lesdits conduits 27.

Les conduits 27 comportent de préférence une gaine 32 comportant elle-même un ressort hélicoïdal à spires jointives ou un empilement d'anneaux. Cette gaine 32 évite l'écrasement des conduits 27.

La cavité 23A du bord de fuite permet de collecter le fluide 22 passant à travers les conduits 27 de la jonction élastique 3 et ne rend plus nécessaire l'alignement desdits conduits 27 avec les conduits 23B du bord de fuite 2.

On se reportera maintenant à la figure 2. Le bord d'attaque 1 est solidaire par une extrémité au carter d'entrée d'air 40 du turbomoteur et par l'autre extrémité au moyeu 41. Le carter d'entrée d'air 40 et le moyeu 41 ont une forme circulaire autour de l'axe 42 et sont liés entre eux par l'ensemble des bords d'attaque 1 des aubes.

Le bord de fuite 2 tourillonne sur deux pivots suivant l'axe de rotation 4. Un pivot intérieur 43 tourillonne dans un alésage 44 sur le moyeu 41. Ce pivot 43 comporte un épaulement 45 en regard d'une butée 46 sur le moyeu 41 et à l'entrée de l'alésage 44, ladite butée étant tournée vers l'extérieur du moyeu 41 et entourant l'alésage 44. Un coussinet, non représenté pour simplifier la figure 2, sera avantageusement disposé dans l'alésage 44 en appui sur la butée 46 pour faciliter la rotation du pivot 43 et éviter l'usure de l'alésage 44 et de la butée 46 du moyeu 41. Le pivot 43 est relié au bord de fuite 2 par un bras 47.

Un pivot extérieur 50 tourillonne dans un alésage 51 du carter d'entrée d'air 40. Ce pivot 50 comporte lui aussi un épaulement 52 venant en regard d'une butée 53 sur le carter d'entrée d'air 40 et à l'entrée de l'alésage 51, ladite butée étant tournée vers l'intérieur du carter d'entrée d'air 40 et entourant l'alésage 51. Comme précédemment, un second coussinet, non représenté pour simplifier la figure 2 sera avantageusement disposé dans l'alésage 51 en appui sur la butée 53. Le pivot 50 est relié au bord de fuite 2 par un bras extérieur 54.

L'extrémité du pivot 50 émerge de l'alésage 51. Un levier de commande 56 est emboîté à l'extrémité du pivot 50 et est rendu solidaire dudit pivot 50 par une vis 57 et un écrou 58. Le positionnement angulaire du levier 56 par rapport au bord de fuite 2 est assuré par exemple par un plat 59 à l'extrémité du pivot 50, ledit plat 59 étant complémentaire d'un autre plat non représenté sur le levier 56.

Le levier de commande 56 comporte à son extrémité opposée au pivot 50 un doigt 60 maintenu au levier 56 par exemple par un sertissage 61. Ce doigt 60 coulisse et pivote radialement dans l'anneau de commande d'aubes 62 lui-même guidé en rotation par une pluralité de patins 63 venant en contact d'une surface 64 circulaire autour du carter d'entrée d'air 40 suivant l'axe 42.

Le carter d'entrée d'air 40 comporte une pluralité d'aubes identiques à celles qui viennent d'être décrites et on comprend qu'un déplacement angulaire de cet anneau de commande 62 autour de l'axe 42 provoque un pivotement uniforme du bord de fuite 2 de chaque aube autour de son axe de pivotement 4.

La cavité 21A du bord d'attaque 1 est ouverte du côté du carter d'entrée d'air 40 et fermée du côté du moyeu 41. Le fluide de réchauffage 22 est injecté dans la cavité 21A par son côté ouvert, passe par les évidements 31 de la cloison de renfort 30, traverse la jonction élastique 3 par les conduits 27, se mélange dans la cavité 23A du bord de fuite 2, se réparti dans chacun des conduits 23B du bord de fuite 2 pour ressortir sur l'intrados par les orifices 26.

Un jeu 65 est laissé entre la jonction élastique 3 et le bras 47 supportant le pivot intérieur 43 du bord de fuite 2. Un jeu analogue 66 est aussi laissé entre la jonction élastique 3 et le bras 54 supportant le pivot extérieur 50 du bord de fuite 2. Ces jeux 65 et 66 permettent d'éviter, lors des pivotements du bord de fuite 2, des frottements parasites entre la jonction élastique 3 et les bras 47 et 54, lesdits frottements pouvant provoquer des déformations non souhaitées de ladite jonction élastique 3.

Ces jeux 65 et 66 vont décroissants et sont nuls ou négatifs dans le voisinage de la cavité 23A du bord de fuite 2 de façon à assurer l'étanchéité de cette cavité 23A et éviter ainsi les pertes de fluide de réchauffage 22.

Afin de pouvoir monter les bords de fuite 2 pivotants, le carter d'entrée d'air 40 et le moyeu 41 sont composés de deux parties respectivement 40A-40B et 41A-41B séparées par une surface en cône de révolution dont l'axe est l'axe 42 du moyeu 41, dont le sommet 67 est l'intersection de l'axe 4 de pivotament de l'aube et de l'axe 42, ladite surface en cône de révolution passant par chacun des axes 4 de pivotement des aubes et permettant ainsi d'ouvrir en deux parties les alésages 44 et 51 dans lesquels tourillonnent les pivots 50 et 43 du bord de fuite 2.

Le montage est alors effectué de la façon suivante :
1) Collage des jonctions élastiques 3 sur les bords de fuite 2.
2) Collage des ensembles jonction élastique - bord de fuite sur les bords d'attaque 1,après avoir disposés les pivots 43 et 50 dans les alésages 44 et 51 ouverts.
3) Montage et boulonnage de la partie 40B du carter d'entrée d'air 40 sur la partie 40A.
4) Montage et boulonnage de la partie 41B du moyeu 41 sur la partie 41A.

Les colles et les techniques de collage employées sont bien connues de l'homme de métier. Dans le cas présent, la colle à froid RTV 732, marque commerciale de la Société Rhône-Poulenc est utilisée.

La jonction élastique 3 est moulée, les gaines 32 des conduits 27 de la jonction élastique 3 étant positionnées dans le moule avant l'injection de l'élastomère.

Si la jonction élastique 3 a une section uniforme et si elle ne comporte pas de conduits 27, elle sera avantageusement découpée dans un profilé.

L'élastomère utilisé est un élastomère à base silicone acceptant une température maximale de 315°C compatible avec la température de fonctionnement en service de 200°C, par exemple le RP 60 THT, marque commerciale Rhône-Poulenc.

Il est clair que l'aube directrice d'entrée d'air qui vient d'être décrite n'est qu'un exemple de réalisation non limitatif de l'invention.

Par exemple l'aube peut comporter un bord d'attaque 1 mobile et un bord de fuite 2 pivotant, ou un bord d'attaque 1 et un bord de fuite 2 pivotants tous les deux.

L'invention autorise aussi de nombreuses variations dans les moyens 21 et 23 de circulation du fluide respectivement dans le bord d'attaque 1 et le bord de fuite 2, comme par exemple un circuit étanche permettant de récupérer pour une autre utilisation le fluide de refroidissement ou de réchauffage qui a traversé l'aube. Dans le cas complexe par exemple d'une aube avec bord d'attaque et bord de fuite pivotants, le fluide peut être injecté dans le bord d'attaque par un de ses pivots, passe dans le bord d'attaque, traverse la jonction élastique, passe dans le bord de fuite pour ressortir par l'autre pivot afin d'être récupéré en vue d'un autre usage, par exemple le dégivrage de la partie avant du moyeu 41.

L'élastomère utilisé est de préférence un élastomère à base silicone. Toutefois, et selon les conditions de température ou d'environnement, on peut choisir aussi des élastomères fluorés ou fluoro-silicones. L'élastomère utilisé a de préférence une dureté shore comprise entre 40 et 70 selon la norme ISO 48-1979 (F).

## Revendications

1. Aube de turbomachine à cambrure variable comportant un bord d'attaque (1) et un bord de fuite (2) articulés l'un par rapport à l'autre dans le sens de la hauteur de l'aube autour d'un axe géométrique de rotation (4), ladite aube comportant un intrados (5) défini par un flanc (6) du bord d'attaque (1) et un flanc (8) du bord de fuite (2), ladite aube comportant aussi un extrados (9) défini par l'autre flanc (10) du bord d'attaque (1) et l'autre flanc (12) du bord de fuite (2), ladite aube comportant entre le bord d'attaque (1) et le bord de fuite (2) un espace à l'intérieur duquel est disposé une jonction (3) en matériau élastique, ladite jonction (3) étant solidaire par un côté au bord d'attaque (1) et par le côté opposé au bord de fuite (2), caractérisée en ce que, la jonction (3) est monobloc et comporte un flanc (7) dans la continuité des flancs (6) et (8) définissant l'intrados (5), ainsi qu'un flanc (11) dans la continuité des flancs (10) et (12) définissant l'extrados.

2. Aube de turbomachine à cambrure variable conforme à la revendication 1 caractérisée en ce que la jonction élastique (3) remplit l'espace entre le bord d'attaque (1) et le bord de fuite (2).

3. Aube de turbomachine à cambrure variable conforme à la revendication 2 caractérisée en ce que la liaison de la jonction élastique (3) avec respectivement le bord d'attaque (1) et le bord de fuite (2) est un collage.

4. Aube de turbomachine à cambrure variable conforme à l'une quelconque des revendications 1 à 3 caractérisée en ce que la jonction (3) est en élastomère ayant une dureté ISO/shore comprise entre 40 et 70.

5. Aube de turbomachine à cambrure variable conforme à l'une quelconque des revendications 1 à 4 caractérisée en ce que la jonction (3) comporte une pluralité de conduits (27) débouchant par une extrémité dans une cavité (21A) du bord d'attaque (1), et par son autre extrémité dans une cavité (23A) du bord de fuite (2).

6. Aube de turbomachine à cambrure variable conforme à la revendication 5 caractérisée en ce que les conduits (27) comportent une gaine (32) pour en éviter l'écrasement.

## Patentansprüche

1. Turbomaschinenschaufel mit variabler Krümmung, die einen Eintrittsrand (1) und einen Austrittsrand (2) aufweist, die gegeneinander in der Höhenrichtung der Schaufel um eine geometrische Drehachse (4) gelenkig verbunden sind, wobei die Schaufel eine innere Bogenfläche (5) aufweist, die durch eine Flanke (6) der Eintrittskante (1) und eine Flanke (8) der Austrittskante (2) festgelegt wird, wobei die Schaufel weiterhin eine äußere Wölbfläche (9) aufweist, die durch die andere Flanke (10) der Eintrittskante (1) und die anderen Flanke (12) der Austrittskante (2) definiert ist, wobei die Schaufel zwischen der Eintrittskante (1) und der Austrittskante (2) einen Raum aufweist, in dessen Inneren eine Verbindung (3) aus einem elastischen Material vorgesehen ist, wobei die Verbindung (3) fest einerseits mit der Eintrittskante (1) und andererseits mit der Austrittskante (2) verbunden ist,
**dadurch gekennzeichnet,** daß die Verbindung (3) aus einem Stück besteht und eine Flanke (7) in der Fortführung der Flanken (6, 8), die die Innenseite der Wölbung (5) festlegen, sowie eine Flanke (11) in der Fortführung der Flanken (10, 12) aufweist, die die Außenseite der Wölbung festlegen.

2. Turbomaschinenschaufel mit variabler Krümmung nach Anspruch 1,
**dadurch gekennzeichnet,** daß die elastische Verbindung (3) den Raum zwischen der Eintrittskante (1) und der Austrittskante (2) füllt.

3. Turbomaschinenschaufel mit variabler Krümmung nach Anspruch 2,
**dadurch gekennzeichnet,** daß die Bindung der elastischen Verbindung (3) mit der Eintrittskante (1) bzw. der Austrittskante (2) durch eine Klebung erfolgt.

4. Turbomaschinenschaufel mit variabler Krümmung nach einem der Ansprüche 1 bis 3,
**dadurch gekennzeichnet,** daß die Verbindung (3) ein Elastomer mit einer ISO/Shore-Härte zwischen 40 und 70 ist.

5. Turbomaschinenschaufel mit variabler Krümmung nach einem der Ansprüche 1 bis 4,
**dadurch gekennzeichnet,** daß die Verbindung (3) mehrere Kanäle (27) aufweist, die an einem Ende in einen Hohlraum (21A) der Eintrittskante (1) und an ihrem anderen Ende in einem Hohlraum (23A) der Austrittskante (2) münden.

6. Turbomaschinenschaufel mit variabler Krümmung nach Anspruch 5,
**dadurch gekennzeichnet,** daß die Kanäle (27) Hüllrohre (32) aufweisen, um ihr Zusammendrücken zu vermeiden.

## Claims

1. Variable-camber turbomachine blade having a leading edge (1) and a trailing edge (2) which are pivoted one with respect to the other in the direction of the height of the blade about a geometrical pivot axis (4), the said blade having a pressure face (5) defined by a lateral surface (6) of the leading edge (1) and a lateral surface (8) of the trailing edge (2), the said blade also having a suction face (9) defined by the other lateral surface (10) of the leading edge (1) and the other lateral surface (12) of the trailing edge (2), the said blade having, between the leading edge (1) and the trailing edge (2), a space inside which is placed a junction (3) made of an elastic material, the said junction (3) being fastened on one side to the leading edge (1) and on the opposite side to the trailing edge (2), characterized in that the junction (3) is made of one piece and has a lateral surface (7) continuous with the lateral surfaces (6) and (8) which define the pressure face (5), and a lateral surface (11) continuous with the lateral surfaces (10) and (12) which define the suction face.

2. Variable-camber turbomachine blade according to Claim 1, characterized in that the elastic junction (3) fills the space between the leading edge (1) and the trailing edge (2).

3. Variable-camber turbomachine blade according to Claim 2, characterized in that the bond between the elastic junction (3) and, respectively, the leading edge (1) and the trailing edge (2) is an adhesive bond.

4. Variable-camber turbomachine blade according to any one of Claims 1 to 3, characterized in that the junction (3) is made of an elastomer having an ISO/Shore hardness of between 40 and 70.

5. Variable-camber turbomachine blade according to any one of Claims 1 to 4, characterized in that the junction (3) includes a plurality of ducts (27) emerging via one end in a cavity (21A) of the leading edge (1) and via its other end in a cavity (23A) of the trailing edge (2).

6. Variable-camber turbomachine blade according to Claim 5, characterized in that the ducts (27) have a sheath (32) in order to prevent them from being crushed.
